(19) Europäisches Patentamt
European Patent Office
Office européen des brevets

(11) **EP 2 789 596 A1**

(12) **EUROPÄISCHE PATENTANMELDUNG**

(43) Veröffentlichungstag:
**15.10.2014  Patentblatt 2014/42**

(51) Int Cl.:
***C04B 35/575*** *(2006.01)*   ***C04B 35/571*** *(2006.01)*

(21) Anmeldenummer: **14001173.5**

(22) Anmeldetag: **28.03.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.04.2013   DE 102013006118**

(71) Anmelder: **FCT Hartbearbeitungs GmbH
96515 Sonneberg (DE)**

(72) Erfinder:
• **Martin, Walter
  96515 Sonneberg (DE)**
• **Wötting, Gerhard, Dr.
  96515 Sonneberg (DE)**

(74) Vertreter: **Weihrauch, Frank et al
Dr. Weihrauch & Haussingen
Patent- und Rechtsanwälte
Neundorfer Strasse 2
98527 Suhl (DE)**

(54) **Herstellung hochreiner, dichter Siliziumcarbid-Sinterkörper und so erhältliche Sinterkörper**

(57)     Verfahren zur Herstellung eines keramischen Sinterkörpers auf Basis von Siliziumcarbid durch Herstellung eines Gemischs aus Siliziumcarbid-Pulver und mindestens 45 Gew.-% pulverförmigem pyrolysiertem siliziumorganischem Polymer ("Black Glass") und druckunterstütztem Verdichten des Gemischs bei Temperaturen von 1200°C bis 2500°C in inerter Atmosphäre oder im Vakuum, sowie so erhältliche keramische Sinterkörper, die sich insbesondere dadurch auszeichnen, dass sie mindestens eine kristalline Siliziumcarbid-Phase und eine amorphe Phase, die aus den Elementen Silizium, Kohlenstoff, Sauerstoff und gegebenenfalls Stickstoff aufgebaut ist, sowie eine Dichte von mindestens 93% der theoretischen Dichte, bestimmt mittels Wasserverdrängungsverfahren nach Archimedes, aufweisen, wobei der Anteil an kristalliner Siliziumcarbid-Phase mindestens 25 Gew.-% und der Gehalt an anderen Elementen als Silizium, Kohlenstoff, Sauerstoff und Stickstoff vorzugsweise ≤ 150 ppm beträgt.

EP 2 789 596 A1

**Beschreibung**

Die vorliegende Erfindung liegt auf dem Gebiet der keramischen Werkstoffe auf der Basis von dichtem Siliziumcarbid (SiC). Sie betrifft insbesondere ein Verfahren zur Herstellung eines hochreinen keramischen Sinterkörpers auf Basis von Siliziumcarbid, ausgehend von gut verfügbaren Rohstoffen, sowie so erhältliche dichte keramische Sinterkörper.

Dichte, auf SiC basierende keramische Werkstoffe und daraus hergestellte Struktur- oder Konstruktions-Komponenten haben sich seit den grundlegenden Entwicklungen von Prochazka und Greskovich in den 70-iger Jahren des letzten Jahrhunderts aufgrund ihrer herausragenden Kombination von technisch interessanten Eigenschaften in weiten Bereichen der Technik etabliert. Diese technisch relevanten Eigenschaften umfassen eine hohe Festigkeit bis zu Temperaturen von 1500°C und mehr, eine hohe Härte und Verschleißbeständigkeit, eine umfassende Korrosionsbeständigkeit vom stark sauren bis in den stark basischen Bereich, eine geringe Wärmedehnung, eine sehr gute Wärmeleitfähigkeit, gute tribologische Eigenschaften und üblicherweise elektrische Halbleiter-Eigenschaften (= ca. $10^2$ - $10^5$ $\Omega$*cm). Deshalb finden derartige Komponenten vielfältigen Einsatz als Dichtringe von Gleitringdichtungen, als Gleitlager, als verschleißbeständige Komponenten in der Aufbereitungstechnik, als Konstruktionsteile von Hochtemperatur- und Chemie-Anlagen, in der Halbleiterfertigung etc..

Zur Herstellung entsprechender Werkstoffe wird üblicherweise ein SiC-Pulverkörper durch Sintern oder Heißpressen verdichtet. Dabei werden Bor und/oder Aluminium bzw. Bor- und/oder Aluminium-haltige Verbindungen, sowie Kohlenstoff als Sinterhilfsmittel zugegeben. Diese verbleiben in deutlich nachweisbarer Konzentration im verdichteten Werkstoff. Für viele Anwendungen ist dies unkritisch. Einige Anwendungen stellen jedoch höchste Anforderungen an die Reinheit der Werkstoffe. Insbesondere die als Sinterhilfsmittel zugesetzten und im Werkstoff verbleibenden B-und / oder Al-Kationen sind in diesen Fällen unerwünscht, da diese die Eigenschaften von Produkten, die bei der Herstellung in Kontakt mit diesen dichten SiC- Komponenten kommen, in unakzeptablem Umfang beeinflussen bzw. verändern können. Dies ist insbesondere der Fall beim Einsatz der SiC-Werkstoffe als Strukturbauteile in der Halbleiter-und Solarzellen- Fertigung, der Kerntechnik, sowie als Sputtermaterial bei bestimmten Sputtertechniken.

Für solche Anwendungen werden Werkstoffe benötigt, die frei von entsprechenden Verunreinigungen sind. Nach den bekannten Verfahren ist jedoch ohne die genannten Sinteradditive eine thermische Verdichtung von SiC-Pulvern, auch feinster, sinteraktiver Qualitäten, zu einem dichten Werkstoff ohne offene Porosität, auch druckunterstützt wie beim Heißpressen, nicht möglich. Es verbleibt immer eine unerwünschte offene Porosität, verbunden mit unzureichenden Eigenschaften des Werkstoffs. Allenfalls durch das äußerst aufwändige heißisostatische Pressen (HIPen) in Kapseln (Clad-HIP) soll eine additivfreie vollständige Verdichtung von SiC möglich sein. Das Verfahren spielt aber wegen der hohen Kosten technisch keine Rolle.

Zur Herstellung von SiC- Werkstoffen ohne Einsatz von Sinteradditiven werden daher verschiedene alternative Routen beschrieben. Diese sind aber entweder extrem aufwändig und daher nicht zur wirtschaftlichen Herstellung größerer Bauteile oder zur Serienproduktion geeignet, oder die erhaltenen Werkstoffe weisen unzureichende Eigenschaften, insbesondere eine unzulängliche Dichte und damit einhergehend schlechte mechanische Eigenschaften auf.

So ist von der Firma Rohm & Haas unter der Bezeichnung CVD Silicon Carbide™ höchstreines, dichtes Siliziumcarbid erhältlich, das ausschließlich aus kristallinem SiC besteht. Dieses wird zur Herstellung von Komponenten empfohlen, die bei der Halbleiterproduktion zum Einsatz kommen. Das Material weist eine Vielzahl der für die genannten Anwendungen erforderlichen Eigenschaften auf und zeichnet sich insbesondere durch eine Reinheit von "5N5", d.h. 99,9995 % aus. Der Gehalt an Verunreinigungen liegt damit bei < 5 ppm. Das Material ist jedoch enorm spröde, was eine Hartbearbeitung zu benötigten Formteilen außerordentlich schwierig macht. Zudem wird das Material über einen chemischen Dampfphasen-Abscheideprozess (chemical vapor deposition, CVD) gewonnen, ein äußerst aufwändiges und teures Verfahren.

Eine andere generelle Route zu einem additivfreien, dichten SiC- Werkstoff ist das sogenannte Reaktionssintern und Silizieren. Der dabei resultierende sogenannte SiSiC- Werkstoff ist ein mehrphasiger Werkstoff, bestehend zumindest aus alpha- und gegebenenfalls β-SiC, aber auch freiem Silizium in einer Konzentration von üblicherweise > 4 Vol.-%. Infolge dieser hohen Konzentration an freiem Silizium werden die Eigenschaften des Werkstoffs vom Silizium bestimmt. Dies limitiert die thermische Beständigkeit des Werkstoffes auf Temperaturen < 1400°C und die Oxidations- und insbesondere die Korrosionsbeständigkeit. Diese SiSiC- Variante stellt somit keine geeignete Alternative zu dichten SiC-Werkstoffen dar.

Auch die WO 2010/007170 A1 (Reau) beschäftigt sich mit der Herstellung dichter SiC-Werkstoffe ohne Einsatz von Sinteradditiven. Dazu wird zunächst durch Kaltpressen oder Agglomeration eines nanoskaligen SiC-Pulvers ein Vorkörper hergestellt, der anschließend mittels Spark Plasma Sintering (SPS) verdichtet wird. Nachteilig ist dabei, dass nanoskaliges SiC-Pulver eingesetzt werden muss, um die gewünschte hohe Dichte des Werkstoffs zu erreichen. Die Herstellung dieses Pulvers erfolgt üblicherweise mittels Laserpyrolyse und ist daher entsprechend aufwändig.

Aus EP 2 487 144 A1 (Aoki) und EP 2 075 232 A2 (Tanaka) sind Verfahren zur Herstellung hochreiner SiC-Sinterkörper ausgehend von härtbaren Silikonpolymeren bekannt. Die Polymere werden gegebenenfalls mit SiC-Pulver oder einer Mischung aus SiC-Pulver und Kohlenstoffpulver versetzt, vernetzt und schließlich in nicht-oxidierender Atmosphäre unter Ausbildung von SiC pyrolysiert. Es lassen sich so Werkstoffe auf Basis von SiC erhalten, die einen sehr geringen Gehalt an Verunreinigungen enthalten. Verfahrensbedingt weisen diese aber eine vergleichsweise hohe Porosität, d.h. eine niedrige Dichte auf, was sich negativ auf die mechanischen Eigenschaften der Werkstoffe auswirkt.

US 2011/0148011 A1 (Colopy) offenbart ein Verfahren zur Herstellung eines polykristallinen keramischen Formkörpers auf der Basis von SiC, bei dem ein poröser SiC- Pulverformkörper mehrfach mit einem Si-organischen Polymer infiltriert und das Polymer vernetzt und pyrolysiert wird. Dem schließt sich eine Glühung bei mindestens 1800°C in inerter Atmosphäre zur Kristallisation des sich aus dem Polymer gebildeten anorganischen Materials an. Dieses Verfahren soll verhindern, dass Verunreinigungen des eingesetzten SiC- Pulvers im Einsatz freigesetzt werden. In dem Material verbleiben verfahrensbedingt mindestens 10 % Porosität, was sich negativ auf die resultierenden mechanischen Eigenschaften auswirkt, so dass es für strukturelle, technische Anwendungen nicht geeignet ist. Zudem ist das Verfahren aufgrund der hohen Anzahl notwendiger Prozessschritte sehr komplex und langwierig.

Esfehanian et al. beschreiben in "Development of Dense Filler-Free Polymer-Derived SiOC Ceramics by Field-Assisted Sintering", J. Am. Ceram. Soc., 91 [11], 3803-3805 (2008) die Herstellung dichter keramischer Werkstoffe ausgehend von Si-organischen Polymeren ohne Einsatz von Füllstoffen oder Katalysatoren. Hierbei wird ein pulverförmiges Polymethylsilsesquioxan bei 250°C erschmolzen, gemahlen und das erhaltene Pulver auf 900°C erhitzt und für 30 Minuten bei dieser Temperatur gehalten. Dabei treten ein Gewichtsverlust von ca. 20% und ein Abbau zu Si-O-C (Siliziumoxicarbid oder auch Black Glass) auf. Dieses Pulver wird in einer Graphit-Matrize mittels Feld-unterstütztem Sintern (FAST) (= Spark Plasma Sintering (SPS)) bei 1400 bis 1600°C unter 20 MPa Druck in Argon verdichtet. Nach der SPS-Verdichtung bei 1500°C verbleibt eine Porosität $\leq 0,5\%$. Mit steigender SPS-Temperatur sind die Dichte und Härte HV (0,3) konstant bei 2,35 g/cm$^3$ bzw. 7,2 GPa, es erfolgt aber eine zunehmende Auskristallisation von nanoskaligem $\beta$-SiC aus der amorphen SiOC- Matrix. Da kein weiterer Gewichtsverlust auftritt, wird geschlossen, dass es zu keiner carbothermischen Reduktion von $Si0_2$ + C und nachfolgenden Neubildung von SiC kommt. Bei dem so erhaltenen keramischen Werkstoff handelt es sich also um einen Werkstoff auf Basis von SiOC, der nur Spuren von auskristallisiertem $\beta$-SiC enthält.

In "Ferrosilicochromium-Filled Polymer-Derived Ceramics", Int. J. Appl. Ceram. Technol., 8 [6] 1509-1516 (2011) offenbaren Schlier et al. die Herstellung dichter SiC-haltiger keramischer Werkstoffe ausgehend von einer Mischung aus Polymethylsilsequioxan und SiC-Pulver. Um dichte keramische Werkstoffe zu erhalten, ist die Zugabe des aktiven Füllers FeSiCr notwendig. Die erfindungsgemäß gewünschte hohe Reinheit der keramischen Sinterkörper lässt sich so nicht erreichen.

Dem Stand der Technik ist somit kein Verfahren zu entnehmen, das die großtechnische Herstellung hochreiner, dichter SiC-Werkstoffe ausgehend von kommerziell erhältlichen Rohstoffen erlaubt.

Aufgabe der vorliegenden Erfindung war es, ein einfaches Verfahren zur Herstellung SiC- basierender Werkstoffe zur Verfügung zu stellen, das es erlaubt, dichte Werkstoffe auch ohne Einsatz üblicher Sinterhilfsmittel in großer Stückzahl und auch großen und/oder komplexen Formen zur Verfügung zu stellen. Zudem sollten SiC- basierende Werkstoffe verfügbar gemacht werden, die sowohl eine hohe Dichte, als auch eine hohe Reinheit aufweisen und über ein wirtschaftliches Verfahren erhalten werden können. Insbesondere die Gehalte an Bor und Aluminium sollen möglichst gering sein, da diese Verunreinigungen in diversen Anwendungen in der Halbleiter- und Photovoltaik-Industrie als kritische Bestandteile angesehen werden.

Es wurde nun gefunden, dass sich keramische Werkstoffe auf Basis von Siliziumcarbid mit den gewünschten Eigenschaften erhalten lassen, wenn eine Mischung aus Siliziumcarbid-Pulver und pulverförmigem pyrolysiertem siliziumorganischem Polymer (in der Literatur auch als Siliziumoxicarbid, SiOC oder Black Glass bezeichnet) einer druckunterstützten Verdichtung bei Temperaturen von 1200°C bis 2500°C in inerter Atmosphäre oder im Vakuum unterworfen wird. Die so erhältlichen SiC-Werkstoffe weisen eine Dichte von mindestens 93% der theoretischen Dichte auf, und ein Gehalt an Verunreinigungen von $\leq 150$ ppm und sogar $\leq 140$ ppm oder $\leq 100$ ppm kann realisiert werden.

Gegenstand der vorliegenden Erfindung ist daher ein Verfahren zur Herstellung eines keramischen Sinterkörpers auf Basis von Siliziumcarbid, wobei ein Gemisch aus Siliziumcarbid-Pulver und pulverförmigem pyrolysiertem siliziumorganischem Polymer (Black Glass) hergestellt wird, wobei der Anteil an pulverförmigem pyrolysiertem siliziumorganischem Polymer mindestens 45 Gew.-% beträgt, bezogen auf die Gesamtmenge an Siliziumcarbid-Pulver und pulverförmigem pyrolysiertem siliziumorganischem Polymer, und das Gemisch bei Temperaturen von 1200°C bis 2500°C und einem Druck von mindestens 1 MPa in inerter Atmosphäre oder im Vakuum verdichtet wird.

Unter einem keramischen Sinterkörper ist jeder dreidimensionale Körper zu verstehen, der durch Sintern eines keramischen Pulverformkörpers und gegebenenfalls mechanische und/oder chemische Nachbehandlung erhalten wird. Es kann sich um eine einfache geometrische Form, wie eine Scheibe, einen Zylinder oder einen kurzen, rohrförmigen Körper handeln. Der Sinterkörper kann jedoch auch eine an den jeweiligen Einsatzzweck angepasste komplexe Geometrie aufweisen. In der Literatur wird oftmals statt von einem keramischen Sinterkörper allgemein von einem keramischen Werkstoff gesprochen, so dass auch im Rahmen der vorliegenden Anmeldung beide Begriffe synonym gebraucht werden.

Überraschenderweise ermöglicht der Zusatz von pyrolysiertem Si-organischem Polymer (Black Glass) zu einem SiC- Pulver eine druckunterstützte Verdichtung, während der im Stand der Technik beschriebene Einsatz des nicht pyrolysierten Si-organischen Polymers alleine oder auch im Gemisch mit SiC-Pulver nicht zum gewünschten Erfolg führt. Das bereits vor dem Vermischen mit dem SiC-Pulver zu Black Glass pyrolysierte Si-organische Polymer scheint relativ inert ohne störende Wechselwirkungen und Gasfreisetzungen ähnlich einer transienten flüssigen Phase beim Sintern zu wirken. Dadurch können auf einfache, kostengünstige Weise weitestgehend dichte keramische Körper mit technisch interessanten Eigenschaften erhalten werden. Da die "Black Glass"-Pyrolyseprodukte im allgemeinen hochrein sind, können mit diesem Verfahren dichte Werkstoffe definierter Reinheit hergestellt werden, auch ohne weitere Zusätze von Sinterhilfsmitteln etc.. Die Reinheit des resultierenden Produkts ist im Wesentlichen durch die Reinheit des eingesetzten SiC-Rohstoffes bestimmt und wird durch den Zusatz an Black Glass noch gesteigert.

Die Zugabe von pyrolysiertem Si-organischem Polymer zu einem zu verdichtenden keramischen Pulver ist nicht auf die Herstellung keramischer Sinterkörper auf Basis von Siliziumcarbid beschränkt. Neben SiC können auf diese Weise des weiteren verschiedenste geeignete keramische Pulver und Pulvermischungen verdichtet werden, wie beispielsweise $B_4C$, TiC und sonstige Carbide, $TiB_2$, $ZrB_2$ und weitere Boride oder auch Silizide, vorausgesetzt, es liegt eine ausreichende thermische Beständigkeit vor und es kommt zu nur geringen Wechselwirkungen mit dem pyrolysierten Polymer / Black Glass.

Die Pyrolyse Si-organischer Polymere zu Siliziumoxicarbid (Black Glass) ist dem Fachmann bekannt und beispielsweise in Zhang et al.: "Synthesis and Characterization of Silicon Oxycarbide Glasses", J. Am. Ceram. Soc., 73 [4] 958-63 (1990), Hurwitz et al.: "Characterization of the pyrolytic conversion of polysilsesquioxanes to silicon oxycarbides", J. of Materials Science 28 (1993) 6622-6630, und Rouxel et al.: "High Temperature Behavior of Gel-Derived SiOC Glass: Elasticity and Viscosity", J. of Sol-Gel Science & Technology 14, 87-94 (1999) beschrieben.

Vorzugsweise werden erfindungsgemäß pyrolysierte siliziumorganische Polymere eingesetzt, die durch Pyrolyse von Alkylpolysiloxanen erhalten werden, bevorzugt durch Pyrolyse von Methylpolysiloxanen, insbesondere bevorzugt durch Pyrolyse von Polymethylsilsequioxanen, ganz besonders bevorzugt durch Pyrolyse des Polymethylsilsequioxans, das von der Firma Wacker unter der Bezeichnung SILRES® MK erhältlich ist. Im Gegensatz zu Polysilanen und Polysilazanen sind die genannten Polysiloxane gegen Feuchtigkeit weitgehend resistent, was ihre Verarbeitbarkeit wesentlich vereinfacht.

SILRES® MK liegt pulverförmig vor, erweicht bei einer Temperatur T > 45°C und kann durch Tempern bei ca. 250°C an Luft unter $H_2O$- Abspaltung zu einem unschmelzbaren Polymer vernetzt werden. Mit weiter steigender Temperatur wandelt das vernetzte Polymer an Luft allmählich in Vorstufen von $SiO_2$ um, unter inerten Bedingungen werden dagegen weitere Bestandteile abgespalten, z.B. $CH_3$, so dass bei einer Temperatur von etwa 800°C ein amorphes Si-O-C-Glas (Oxicarbidglas / "Black Glass") resultiert, dessen Viskosität höher ist, als die des zähesten oxidischen Glases, dem Kieselglas.

Entsprechend findet die Pyrolyse zur Herstellung des erfindungsgemäß benötigten pyrolysierten siliziumorganischen Polymers in einer nicht-oxidierenden Atmosphäre, vorzugsweise unter Argon, statt. Die Pyrolyse erfolgt vorzugsweise bei einer Temperatur von 800 bis 900°C, wobei die Pyrolysetemperatur vorzugsweise für 1 bis 5 Stunden gehalten wird.

Das erfindungsgemäß eingesetzte Siliziumcarbid-Pulver unterliegt keinen prinzipiellen Restriktionen. Vorzugsweise kommen jedoch handelsübliche Produkte zum Einsatz, insbesondere solche Siliziumcarbid-Pulver Qualitäten, deren Gehalt an Verunreinigungen ausgewählt aus Fe, Mg, Ti und Ca in einer Gesamtkonzentration bei < 1000 ppm liegt.

Bei dem Siliziumcarbid kann es sich um α-SiC handeln. Dabei ist das Siliziumcarbid vorzugsweise bereits auf mindestens eine Feinheit von 10 m²/g (nach BET) und/oder einen d-95 Kennwert der Teilchengrößen-Verteilung von ≤ 5 μm (bestimmt mittels Laserbeugung) aufbereitet. Ein besonders geeignetes Siliziumcarbid-Pulver ist das α-SiC- Pulver "UF-15" der H.C. Starck GmbH, Goslar. Es können aber auch β-SiC-Pulver eingesetzt werden. Bevorzugte β-SiC-Pulver sind das von der Firma H.C. Starck GmbH, Goslar, erhältliche β-SiC-Pulver BF-12 (spezifische Oberfläche: ca. 5 m²/g; d-90-Wert: 90 % der Teilchen ≤ 4 μm; Verunreinigungsgehalt an Kationen ≤ 500 ppm) und das hochreine, über eine Reaktionssynthese hergestellte, β-SiC-Pulver, das von der H.C. Starck GmbH, Goslar, unter der Bezeichnung B-hp Pulver vertrieben wird. Dieses weist eine spezifische Oberfläche von ca. 5 m²/g, einen d-90-Wert von 90 % der Teilchen ≤ 5 μm, sowie einen Verunreinigungsgehalt an definierten Kationen von ≤ 30 ppm auf.

Der Anteil an pulverförmigem pyrolysiertem siliziumorganischem Polymer im Gemisch aus Siliziumcarbid-Pulver und pulverförmigem pyrolysiertem siliziumorganischem Polymer beträgt erfindungsgemäß mindestens 45 Gew.-%, vorzugsweise mindestens 47 Gew.-%, besonders bevorzugt mindestens 48 Gew.-%. Um zu gewährleisten, dass nach dem erfindungsgemäßen Verfahren ein dichter keramischer Sinterkörper auf Basis von Siliziumcarbid resultiert, liegt der Anteil an pulverförmigem pyrolysiertem siliziumorganischem Polymer jedoch bevorzugt bei maximal 75 Gew.-%, besonders bevorzugt bei maximal 70 Gew.-% und ganz besonders bevorzugt bei maximal 60 Gew.-%.

Dem Gemisch aus Siliziumcarbid-Pulver und pulverförmigem pyrolysiertem siliziumorganischem Polymer können vor dem Verdichten weitere Bestandteile zugesetzt werden, beispielsweise um die Eigenschaften des entstehenden keramischen Werkstoffs gezielt einzustellen. Als weitere Bestandteile kommen beispielsweise andere Carbide, wie TiC oder WC, aber auch $Si_3N_4$ in Frage.

Bevorzugt werden dem Gemisch aus Siliziumcarbid-Pulver und pulverförmigem pyrolysiertem siliziumorganischem Polymer jedoch maximal 1 Gew.-%, bezogen auf das Gesamtgewicht der Mischung, weitere Bestandteile zugegeben.

Es ist insbesondere bevorzugt, dass das Gemisch aus Siliziumcarbid-Pulver und pulverförmigem pyrolysiertem siliziumorganischem Polymer keine Bor- oder Aluminium-haltigen Bestandteile enthält.

Der Gehalt an weiteren Bestandteilen beträgt vorzugsweise maximal 0,5 Gew.-%, besonders bevorzugt maximal 0,1 Gew.-%, jeweils bezogen auf das Gesamtgewicht der Mischung.

Besonders bevorzugt enthält das Gemisch aus Siliziumcarbid-Pulver und pulverförmigem pyrolysiertem siliziumorganischem Polymer keine weiteren Bestandteile, d.h. das zu verdichtende Gemisch besteht ausschließlich aus Siliziumcarbid-Pulver und pulverförmigem pyrolysiertem siliziumorganischem Polymer, wobei selbstverständlich auch mehrere Siliziumcarbid-Pulver und/oder mehrere pulverförmige pyrolysierte siliziumorganische Polymere zum Einsatz kommen können.

Die Herstellung des Gemischs kann nach den bekannten Verfahren erfolgen. Mischung der trockenen Pulver in üblichen Mischaggregaten ist möglich. In der Regel werden die Bestandteile des Gemischs jedoch in einem flüssigen Medium gemeinsam aufbereitet und gemischt.

Vorzugsweise wird das pulverförmige pyrolysierte siliziumorganische Polymer vor dem Vermischen mit dem Siliziumcarbid-Pulver auf eine Teilchengröße von $100\ \% \leq 10\ \mu m$, bestimmt mittels Laserbeugungsverfahren, aufbereitet. Das Laserbeugungsverfahren zur Bestimmung der Teilchengröße ist dem Fachmann hinreichend bekannt. Es stehen von verschiedenen Anbietern kommerziell erhältliche Analysegeräte zur Verfügung. Im Rahmen der vorliegenden Erfindung wird die Teilchengröße mit einem Laserbeugungsgerät CILAS 1064 der Firma CILAS gemessen.

Vorzugsweise wird auch das Gemisch aus Siliziumcarbid-Pulver und pulverförmigem pyrolysiertem siliziumorganischem Polymer auf eine Teilchengröße von $100\ \% \leq 10\ \mu m$, bestimmt mittels Laserbeugungsverfahren, aufbereitet.

Die Aufbereitung erfolgt jeweils vorzugsweise durch Nassmahlung in deionisiertem Wasser.

Das erhaltene Gemisch wird erfindungsgemäß bei Temperaturen von 1200°C bis 2500°C und einem Druck von mindestens 1 MPa in inerter Atmosphäre oder im Vakuum verdichtet.

Unter einer inerten Atmosphäre ist dabei eine Atmosphäre zu verstehen, die keinen Bestandteil enthält, der unter Sinterbedingungen mit einem der Bestandteile des Pulvergemischs abreagiert. Insbesondere ist die Sinteratmosphäre frei von reaktiven Gasen, insbesondere frei von $N_2$, $H_2$ und $O_2$. Vorzugsweise wird in einer Atmosphäre der Edelgase Helium, Neon und/oder Argon gearbeitet. Besonders bevorzugt erfolgt die Verdichtung in einer Argonatmosphäre.

Der Verdichtungsdruck beträgt erfindungsgemäß vorzugsweise 3 bis 50 MPa, besonders bevorzugt 5 bis 45 MPa.

Es hat sich gezeigt, dass druckunterstütztes Verdichten notwendig ist, um SiC-Sinterkörper zu erhalten, die eine Dichte von mindestens 93% der theoretischen Dichte aufweisen und damit als "dicht" bezeichnet werden können.

Bevorzugt erfolgt die Verdichtung mittels Heißpressen, heißisostatischem Pressen, Spark Plasma Sintern oder feldunterstütztem Sintern, insbesondere bevorzugt mittels Heißpressen.

Vorzugsweise wird die Verdichtung bei Temperaturen von 1300°C bis 2000°C durchgeführt, besonders bevorzugt bei 1400°C bis 1900°C und ganz besonders bevorzugt bei 1500°C bis 1800°C.

Übliche Haltezeiten bei den spezifizierten Temperaturen sind, je nach Größe, Komplexität und insbesondere Wandstärke des zu sinternden Körpers 15 min bis 5 h, bevorzugt 30 min bis 3 h.

Nach dem Verdichten unter den erfindungsgemäßen Bedingungen können sich zur Herstellung der Endprodukte noch verschiedene Nachbehandlungsschritte anschließen. Im Regelfall werden jedoch nur noch eng tolerierte Dimensionen, geforderte Form- und Lagetoleranzen, sowie Oberflächen-zustände, insbesondere durch Schleifen erzeugt.

Die resultierenden keramischen Sinterkörper auf Basis von Siliziumcarbid zeichnen sich neben ihrer hohen Dichte und dem niedrigen Gehalt an Verunreinigungen auch durch vorteilhafte mechanische Eigenschaften und damit insgesamt durch ein einzigartiges Eigenschaftsprofil aus.

Ein weiterer Gegenstand der Erfindung sind daher keramische Sinterkörper auf Basis von Siliziumcarbid, die nach dem erfindungsgemäßen Verfahren erhältlich sind.

Ein weiterer Gegenstand der Erfindung sind keramische Sinterkörper auf Basis von Siliziumcarbid, die eine amorphe Phase, die aus den Elementen Silizium, Kohlenstoff, Sauerstoff und gegebenenfalls Stickstoff aufgebaut ist, und mindestens eine kristalline Siliziumcarbid-Phase, sowie eine Dichte von mindestens 93% der theoretischen Dichte, bestimmt mittels Wasserverdrängungsverfahren nach Archimedes, aufweisen, wobei der Anteil an kristalliner Siliziumcarbid-Phase mindestens 25 Gew.-% und der Gehalt an anderen Elementen als Silizium, Kohlenstoff, Sauerstoff und Stickstoff vorzugsweise $\leq 150$ ppm beträgt.

Vorzugsweise beträgt der Gehalt an anderen Elementen als Silizium, Kohlenstoff, Sauerstoff und Stickstoff $\leq 140$ ppm, besonders bevorzugt $\leq 100$ ppm.

Vorzugsweise liegt der Anteil an kristalliner Siliziumcarbid-Phase bei mindestens 30 Gew.-%, besonders bevorzugt bei mindestens 40 Gew.-% und ganz besonders bevorzugt bei mindestens 50 Gew.-%.

Bevorzugt weist der keramische Sinterkörper eine Bruchzähigkeit $K_{IC}$ von $\geq$ 4 MPa*m$^{1/2}$, eine 4-Punkt-Biegefestigkeit bei Raumtemperatur von $\geq$ 250 MPa und eine 4-Punkt-Biegefestigkeit bei 1250°C von $\geq$ 400 MPa auf.

Die Bruchzähigkeit $K_{IC}$ wird nach dem in einem weltweiten Vergleichsversuch als am zuverlässigsten eingestuften SEVNB- Verfahren bestimmt, beschrieben in "J. Kübler: Fracture Toughness of Ceramics using SEVNB Method: Round Robin"; VAMAS Report Nr. 37 (ISSN 1016-2186).

Die Bestimmung der 4-Punkt-Biegefestigkeit bei Raumtemperatur (RT-BF) und bei 1250°C erfolgt nach DIN EN 843-1 an stabförmigen Prüfkörpern der Abmessung 4 x 3 x 45 mm in 4-Punkt-Biegung mit Stützabstand 40/20 mm. Die Mindestanzahl zu prüfender Biegefestigkeitsproben wird mit 8 festgelegt.

Die erfindungsgemäßen keramischen Sinterkörper auf Basis von Siliziumcarbid lassen sich in den verschiedensten Anwendungen einsetzen. Die geringe Menge an Verunreinigungen, insbesondere die geringen Mengen an Bor und Aluminium, erlauben insbesondere den Einsatz der SiC-Werkstoffe als Strukturbauteile in der Halbleiter- und Solarzellen- Fertigung, der Kerntechnik, sowie als Sputtermaterial bei bestimmten Sputtertechniken.

Ein weiterer Gegenstand der Erfindung ist daher die Verwendung der erfindungsgemäß erhältlichen und erfindungsgemäßen keramischen Sinterkörper als Strukturteile, wie Platten, Stützen, Halterungen etc., bei der Herstellung von Halbleiter- und LED- Elementen, elektronischen Bauteilen, Photovoltaik-Solarzellen, sowie bei Beschichtungsprozessen, die bei hohen Temperaturen unter aggressiven Atmosphären stattfinden.

Die nachfolgenden Beispiele dienen dazu, den Gegenstand der vorliegenden Erfindung weiter zu erläutern. Sie stellen jedoch keinerlei Beschränkung des der Erfindung zugrunde liegenden Grundkonzepts dar.

Beispiele

Die im Folgenden angegebenen Mengenangaben verstehen sich - soweit nichts anderes vermerkt ist - in Gewichtsprozent.

Beispiele 1 bis 5:

Pulverförmiges pyrolysiertes siliziumorganisches Polymer (Black Glass - Pulver; BG - Pulver):

Zur Herstellung des BG - Pulvers wurde Methyl-Silikonharz SILRES® MK Flakes der Wacker Chemie AG, München, eingesetzt. Dieses weist eine Basisstruktur $(CH_3SiO_{1,5})_n$ auf, was einer gewichtsmäßigen Zusammensetzung von 17,9 C, 41,8 Si, 35,8 O und 4,5 H (in Gew.-%) entspricht.

Das Silikonharz wurde im Trockenschrank an Luft bei 250°C über Nacht ($\geq$ 12 h) vernetzt und anschließend unter 1 bar Argon in einem Schutzgasofen bei 800°C für 2h pyrolysiert. Während der Vernetzung trat ein Gewichtsverlust von ca. 5,5 Gew.-%, während der Pyrolyse ein weiterer Gewichtsverlust von ca. 11,2 Gew.-% auf. Das resultierende "Black Glass" wurde auf eine Feinheit von < 1 mm gemörsert und anschließend mittels Planetenmühle in SiC- Mahltöpfen mit SiC-Mahlkugeln trocken auf < 63 $\mu$m aufgemahlen bzw. gröbere Bestandteile durch Sieben < 63 pm abgetrennt. Die für die einzelnen Ansätze benötigten "Black Glass"-Mengen wurden anschließend mittels Planetenmühle in SiC- Mahltöpfen mit SiC- Mahlkugeln wässrig gemahlen, wobei ein Feststoffgehalt von 33,3 % eingestellt wurde. Die Zielfeinheit dieser Mahlung, kontrolliert mittels Laserbeugungsverfahren, war 100 % < 10 $\mu$m.

Siliziumcarbid-Pulver:

Als Siliziumcarbid-Pulver wurde das von der Firma H.C. Starck GmbH, Goslar, erhältliche $\alpha$-SiC- Pulver UF-15 (spezifische Oberfläche 15 m$^2$/g, d-90: 90 % der Teilchen $\leq$ 1,2 $\mu$m, Verunreinigungsgehalt an Kationen < 1000 ppm) eingesetzt.

Herstellung des Gemischs aus BG-Pulver und SiC-Pulver:

BG-Pulver und SiC-Pulver wurden in den in Tabelle 1 angegebenen Mengenverhältnissen mittels Planetenmühle in SiC- Mahltöpfen mit SiC- Mahlkugeln in Chargen von 150 g zur Desagglomeration und Homogenisierung der Bestandteile wässrig gemahlen, wobei ein Feststoffgehalt von 33,3 % eingestellt wurde. Diese Mahlung erfolgte im direkten Anschluss an die oben beschriebene Mahlung des "Black Glass". Der so erhaltene Schlicker wurde < 63 pm abgesiebt, in flache Schalen überführt, bei - 18°C eingefroren und anschließend zur Vermeidung harter Trocknungsgranulate gefriergetrocknet. Die Teilchengrößenverteilung (TGV) des getrockneten Materials lag bei 100% <10 $\mu$m, bestimmt mittels Laserbeugungsverfahren.

Verdichtung:

Die getrockneten und <150 μm siebgranulierten Gemische wurden jeweils in eine mit C-Folie ausgekleidete Graphit Heißpressform von Ø 80 mm eingefüllt und in einer Graphit- widerstandsbeheizten Heißpresse vom Typ KCE-FCT verdichtet. Dies erfolgte zu Beginn unter Vakuum, gerätetypischem Vordruck von 5 MPa und leistungsgesteuerter Heizrampe. Nach ca. 15 min wurde die Anlage mit Argon geflutet, ab 1000°C über eine Temperaturmessung mittels Pyrometer geregelt mit 10 K/min weiter aufgeheizt, und bei 1400°C der volle Verdichtungsdruck von 40 MPa aufgebracht. Unter diesen Bedingungen erfolgte das weitere Aufheizen bis maximal 1700°C, gefolgt von einer isothermen Haltezeit von 15 - 120 min (die jeweilige maximale Verdichtungstemperatur T max und die Haltezeit sind in Tabelle 1 wiedergegeben). Nach dieser Haltezeit wurde der Druck abgebaut und die Heizung abgeschaltet, so dass die gesamte Anordnung ungeregelt abkühlte.

Ergebnisse:

Nach dem Entformen der verdichteten Platten wurden diese vorsichtig sandgestrahlt, allseitig überschliffen und die Dichte nach dem Wasserverdrängungsverfahren nach Archimedes bestimmt. Die mittels des Wasserverdrängungsverfahrens nach Archimedes bestimmte Dichte wurde in Bezug gesetzt zur berechneten theoretischen Dichte (th.D.), wodurch die "HP-Dichte in % der th.D." erhalten wird. Die jeweilige theoretische Dichte wurde nach der folgenden Formel berechnet:

$$th.D. = (c_1 * \rho_1 + c_2 * \rho_2 + \ldots + c_n * \rho_n)/100 \ [g/cm^3]$$

mit:

$c_1, c_2, \ldots c_n$ = Konzentration der Phase 1, 2, .. n, in Gew.-%
$\rho_1, \rho_2, \ldots \rho_n$ = Reindichte der Phasen 1, 2, ... n, in $g/cm^3$

Für das reine SiC- Pulver wird hierbei eine Reindichte von 3,19 $g/cm^3$, für das BG-Pulver eine Reindichte von 2,25 $g/cm^3$ eingesetzt. Letztere wurde wie folgt bestimmt: Reines BG-Pulver wurde wie oben unter Verdichtung beschrieben bei 1700°C heißgepresst. Die Dichte des erhaltenen Materials nach dem Wasserverdrängungsverfahren nach Archimedes betrug 2,25 $g/cm^3$. Die Wasseraufnahme betrug 0, so dass davon ausgegangen wurde, dass ein vollständig dichter SiOC - Sinterkörper vorlag. Dies wurde durch eine röntgenographische Phasenanalyse zur Ermittlung des mineralogischen Phasenbestandes bestätigt. Das Material ist weitgehend amorph, allenfalls im Bereich der Hauptreflexe von Graphit, sowie von SiC treten schwache Signale auf, was auf die Anwesenheit dieser Phasen im kryptokristallinen Maßstab deutet. Weitere kristalline Phasen wurden nicht detektiert. Mittels Trägergas- Heißgasextraktion (Leco) wurde der Kohlenstoff- und Sauerstoff-Gehalt dieses Materials analysiert. Diese Analyse ergab 12,9 Gew.-% C und 44,7 Gew.-% O, wobei die Differenz zu 100 Gew.-% als Si angesehen werden kann und somit 42,4 Gew.-% Si beträgt.

Die Differenz des Wertes "HP-Dichte in % von th.D." zu 100 % stellt die verbliebene Porosität in Vol.-% dar.

Die gemessene Dichte, die theoretische Dichte und die HP-Dichte in % der th.D. sind in Tabelle 1 wiedergegeben.

Tabelle 1:

| Beispiel | 1 (Vergleich) | 2 (Vergleich) | 3 (Vergleich) | 4 | 5 |
|---|---|---|---|---|---|
| SiC [Gew.-%] | 80 | 70 | 60 | 50 | 50 |
| BG-Pulver [Gew.-%] | 20 | 30 | 40 | 50 | 50 |
| | | | | | |
| T max [°C] | 1700 | 1700 | 1700 | 1650 | 1600 |
| Haltezeit [min] | 120 | 15 | 15 | 15 | 120 |
| | | | | | |
| Dichte gemessen [g/cm³] | 1,72 | 2,4 | 2,5 | 2,55 | 2,64 |
| Th.D. [g/cm³] | 3,00 | 2,91 | 2,81 | 2,72 | 2,72 |
| Dichte in % der th.D. [%] | 57,3 | 82,5 | 88,8 | 93,8 | 97,1 |

Die Ergebnisse zeigen, dass die Verdichtung von Gemischen, deren Anteil an BG - Pulver unterhalb von 45 Gew-% liegt (Beispiele 1-3; nicht erfindungsgemäß) nicht zu Sinterkörpern der gewünschten Dichte führen.

Das gemäß Beispiel 4 erhaltene Material wurde wie folgt weiter charakterisiert.

Durch Trennen und Schleifen mittels Diamantwerkzeugen wurden die zur Werkstoff-Charakterisierung benötigten Prüfkörper hergestellt. An diesen Prüfkörpern wurden die 4-Punkt-Biegefestigkeit bei verschiedenen Temperaturen, die Härte HV 10, die Bruchzähigkeit $K_{IC}$, sowie der röntgenographische Phasenbestand bestimmt.

Die Bestimmung der Biegefestigkeit bei Raumtemperatur (RT) erfolgte nach DIN EN 843-1 an stabförmigen Prüfkörpern der Abmessung 4 x 3 x 45 mm in 4-Punkt-Biegung mit Stützabstand 40/20 mm. In gleicher Weise wurde die Biegefestigkeit bei den höheren Temperaturen an Luft ermittelt, unter Verwendung einer aus SiC hergestellten 4-Punkt- Biegezelle, die von einem regelbaren Ofen umgeben ist.

Die Härte wurde an polierten Anschliffen nach DIN EN 843-4 unter Verwendung eines Kleinlast-Härteprüfers und eines Vickers- Eindruckdiamanten bei einer Last von 10 kp (HV10) ermittelt, die Bruchzähigkeit $K_{IC}$ durch Auswertung der beim Härteeindruck entstandenen Risslängen berechnet. Dieses Verfahren ist in der Literatur als "ICL" = "Indentation - Crack - Length" beschrieben, die Auswertung erfolgt nach der Formel von Niihara.

Der röntgenographische Phasenbestand wurde mit dem bekannten Verfahren der Röntgenbeugung mit CuK$\alpha$1-Strahlung bestimmt und mittels der üblichen PDF- Referenzdateien elektronisch ausgewertet.

Die Ergebnisse finden sich in Tabelle 2:

Tabelle 2:

| Werkstoff gemäß Beispiel 4 | |
|---|---|
| Biegefestigkeit bei RT [MPa] | 275 |
| Biegefestigkeit bei 1000°C [MPa] | 400 |
| Biegefestigkeit bei 1250°C [MPa] | 425 |
| Biegefestigkeit bei 1300°C [MPa] | 370 |
| | |
| Härte HV 10 bei RT | 800 |
| Bruchzähigkeit $K_{IC}$ bei RT [MPa*m$^{1/2}$] | 5 |
| | |
| Röntgenographischer Phasenbestand | $\alpha$-SiC |

Wie die aufgeführten Ergebnisse zeigen, weist der Werkstoff eine wesentlich höhere RT-Festigkeit als reines heißgepresstes "Black Glass" auf (Literaturwerte: 70 - 100 MPa), wobei die Festigkeit bis 1250°C sogar ansteigt, möglicherweise durch Ausheilen von Oberflächen-Defekten. Bei noch höheren Temperaturen nimmt die Festigkeit wieder ab, vermutlich infolge Erweichung der verbliebenen Glasphase im Material, was auch an einer beginnenden Verformung der Proben während der Festigkeitsprüfung bei Temperaturen über 1250°C zu erkennen war. Bis zu mindestens dieser Temperatur kann der Werkstoff aber als thermisch beständig bezeichnet werden. Die röntgenographische Phasenanalyse zeigt als einzige nachweisbare kristalline Phase $\alpha$- SiC in Form des Minerals Moissanit.

Trotzdem ist die Härte für einen SiC- basierenden Werkstoff vergleichsweise niedrig, was ebenfalls auf die im Gefüge verbliebene Glasphase zurückgeführt wird. Dagegen ist die Bruchzähigkeit vergleichsweise hoch, was eine relativ geringe Sprödigkeit des Werkstoffes widerspiegelt.

Dies zeigt, dass nach dem erfindungsgemäßen Verfahren ein additivfreier, dichter, auf SiC- basierender Werkstoff auf Basis kostengünstiger, kommerziell verfügbarerer, technischer Rohstoffe mit technisch interessanten mechanischen und thermochemischen Eigenschaften zur Verfügung gestellt wird, wie er bislang nicht verfügbar war.

Beispiel 6:

Pulverförmiges pyrolysiertes siliziumorganisches Polymer (Black Glass - Pulver; BG - Pulver):

Es kam das bei den Beispielen 1 bis 5 beschriebene BG-Pulver zum Einsatz

Siliziumcarbid-Pulver:

Als Siliziumcarbid-Pulver wurde das von der Firma H.C. Starck GmbH, Goslar, erhältliche $\beta$-SiC-Pulver BF-12 (spezifische Oberfläche: ca. 5 m$^2$/g; d-90-Wert: 90 % der Teilchen $\leq$ 4 $\mu$m; Verunreinigungsgehalt an Kationen $\leq$ 500 ppm) eingesetzt.

Herstellung des Gemischs aus BG-Pulver und SiC-Pulver und Verdichtung erfolgten wie bei den Beispielen 1 bis 5 beschrieben.

Mengenverhältnisse der Bestandteile, maximale Verdichtungstemperatur T max und Haltezeit, sowie Angaben zur Dichte des erhaltenen Werkstoffs finden sich in Tabelle 3.

Tabelle 3:

| Beispiel | 6 |
|---|---|
| $\beta$-SiC [Gew.-%] | 50 |
| BG-Pulver [Gew.-%] | 50 |
| | |
| T max [°C] | 1600 |
| Haltezeit [min] | 60 |
| | |
| Dichte gemessen [g/cm$^3$] | 2,66 |
| Th.D. [g/cm$^3$] | 2,72 |
| Dichte in % der th.D. [%] | 97,8 |

Die Ergebnisse zeigen, dass auch bei Einsatz von $\beta$-SiC Sinterkörper der gewünschten Dichte erhalten werden können.

Das gemäß Beispiel 6 erhaltene Material wurde wie für Beispiel 4 beschrieben weiter charakterisiert. Die Ergebnisse finden sich in Tabelle 4:

Tabelle 4:

| Werkstoff gemäß Beispiel 6 | |
|---|---|
| Biegefestigkeit bei RT [MPa] | 300 |
| Biegefestigkeit bei 1000°C [MPa] | 495 |
| Biegefestigkeit bei 1250°C [MPa] | 395 |
| Biegefestigkeit bei 1300°C [MPa] | 380 |
| | |
| Härte HV 10 bei RT | 1010 |
| Bruchzähigkeit $K_{IC}$ bei RT [MPa*m$^{1/2}$] | 5 |
| | |
| Röntgenographischer Phasenbestand | $\beta$-SiC (Hauptphase); $\alpha$-SiC (Spur) |

Das Ergebnis der röntgenographischen Phasenanalyse zeigt, dass die $\beta$-SiC-Modifikation des eingesetzten SiC-Pulvers während des Verdichtungsprozesses weitgehend erhalten bleibt und sich nur ein geringer Anteil $\alpha$-SiC bildet. Weitere kristalline Phasen konnten nicht detektiert werden.

Beispiele 7 bis 8:

Pulverförmiges pyrolysiertes siliziumorganisches Polymer (Black Glass - Pulver; BG - Pulver):

Es kam das bei den Beispielen 1 bis 5 beschriebene BG-Pulver zum Einsatz

Siliziumcarbid-Pulver:

Da technische $\alpha$-SiC- Pulver, hergestellt nach dem Acheson-Verfahren, ein gewisses Verunreinigungsniveau nicht unterschreiten, wurde hier verfolgt, einen minimalen Verunreinigungsgehalt des SiC-basierenden Werkstoffes zu realisieren, wie ihn die Halbleiter-Industrie fordert. Dafür wurde das hochreine, über eine Reaktionssynthese hergestellte, β-SiC-Pulver eingesetzt, das von der H.C. Starck GmbH, Goslar, unter der Bezeichnung B-hp Pulver vertrieben wird. Dieses weist eine spezifische Oberfläche von ca. 5 $m^2$/g, einen d-90-Wert von 90 % der Teilchen $\leq$ 5 $\mu$m, sowie einen Verunreinigungsgehalt an definierten Kationen von $\leq$ 30 ppm auf.

Die Herstellung des Gemischs aus BG-Pulver und SiC-Pulver und Verdichtung erfolgten wie bei den Beispielen 1 bis 5 beschrieben, wobei bei Beispiel 8 eine Platte von Ø 180 mm hergestellt wurde, um die Übertragbarkeit des erfindungsgemäßen Verfahrens in den technischen Maßstab zu belegen.

Mengenverhältnisse der Bestandteile, maximale Verdichtungstemperatur T max und Haltezeit, sowie Angaben zur Dichte des erhaltenen Werkstoffs finden sich in Tabelle 5.

Tabelle 5:

| Beispiel | 7 | 8 |
|---|---|---|
| hp-β-SiC [Gew.-%] | 50 | 50 |
| BG-Pulver [Gew.-%] | 50 | 50 |
| | | |
| T max [°C] | 1600 | 1600 |
| Haltezeit [min] | 120 | 120 |
| Platten-Ø [mm] | 80 | 180 |
| | | |
| Dichte gemessen [g/cm$^3$] | 2,67 | 2,65 |
| Th.D. [g/cm$^3$] | 2,72 | 2,72 |
| Dichte in % der th.D. [%] | 98,2 | 97,4 |

Die Ergebnisse zeigen, dass auch bei Einsatz von hochreinem β-SiC Sinterkörper der gewünschten Dichte erhalten werden können.

Das gemäß Beispiel 7 erhaltene Material wurde wie für Beispiel 4 beschrieben weiter charakterisiert. Die Ergebnisse finden sich in Tabelle 6:

Tabelle 6:

| Werkstoff gemäß Beispiel 7 | |
|---|---|
| Biegefestigkeit bei RT [MPa] | 360 |
| Härte HV 10 bei RT | 1070 |
| Bruchzähigkeit $K_{IC}$ bei RT [MPa*m$^{1/2}$] | 5,1 |
| | |
| Röntgenographischer Phasenbestand | β-SiC (Hauptphase); α-SiC (Spur) |

An dem gemäß Beispiel 7 erhaltenen Werkstoff wurde eine GDMS-Analyse (Glow Discharge Mass Spectroscopy) von einem akkreditierten Prüfinstitut ausgeführt, die das folgende Ergebnis bezüglich des Verunreinigungsgehaltes an Kationen ergab (Konzentrationen angegeben als $\mu$g/g Si + C):

| Element | Konzentration [$\mu$g/g Si + C] |
|---|---|
| B | 74 |
| Fe | 20 |
| Al | 9 |
| Ca | 28 |

(fortgesetzt)

| Element | Konzentration [$\mu$g/g Si + C] |
|---|---|
| Cr | 6 |
| Ni | 1 |
| Cu | 8 |
| Summe Kationen | 146 |

Dieses Ergebnis zeigt, dass nach dem erfindungsgemäßen Verfahren unter Einsatz geeigneter reiner, kommerziell verfügbarer SiC-Rohstoffe ein dichter, SiCbasierender Werkstoff mit spezifizierten mechanischen Eigenschaften und einer Reinheit von < 150 ppm bezüglich der analysierten Kationen herstellbar ist, wie er bislang nicht verfügbar war. Als Quelle des detektierten B wird Mahlabrieb der verwendeten SiC-Mahlgarnitur vermutet.

Anwendungsbeispiel:

Platten der Abmessung 100 x 40 x 5 mm, allseitig überschliffen, die nach dem Verfahren gemäß Beispiel 4 hergestellt wurden, wurden in einem industriell angewandten Halbleiter-Herstellungsprozess über 100 h einer halogenhaltigen Atmosphäre bei 1200°C ausgesetzt. Das Verhalten des Werkstoffs unter diesen Bedingungen wurde mit der gesinterten SiC- Qualität #135 der FCT Hartbearbeitungs GmbH verglichen. Aufgrund der Reinheit (minimaler B- Gehalt) konnte mit dem erfindungsgemäßen Werkstoff keinerlei Kontamination der Reaktoratmosphäre und des im Reaktor hergestellten Produkts detektiert werden, im Gegensatz zum Einsatz von Sinter- SiC #135. Letzteres wies nach dieser Expositionszeit deutliche Korrosionsschäden und einen hohen Gewichtsverlust auf, während der erfindungsgemäße Werkstoff nur eine leichte oberflächliche Verfärbung zeigte, wobei keine Gewichtsabnahme nachweisbar war.
Dieses Beispiel ist exemplarisch zu sehen und beschreibt nicht die Spannweite dieser Erfindung. Der Fachmann erkennt leicht, welche weiteren Variations- und Anwendungsmöglichkeiten dieser neue Werkstoff und das Verfahren zu seiner Herstellung bieten. Neben anderen partikulären Pulvermischungen (z.B. refraktäre Boride, Carbide, Nitride, Silizide etc.) können z.B. darüber hinaus auch Mischungen der geeigneten Pulver mit Kohlenstoff-Kurzfasern, Carbon-Nanotubes (CNTs) oder anderen geeigneten Fasern (z.B. C, SiC) verdichtet werden, um bestimmte technisch relevante Eigenschaften einzustellen, sofern die Zusätze eine ausreichende thermische Beständigkeit aufweisen und nur geringe Wechselwirkungen mit dem pulverförmigen pyrolysierten siliziumorganischen Polymer bei der thermischen Verdichtung zeigen.

**Patentansprüche**

1. Verfahren zur Herstellung eines keramischen Sinterkörpers auf Basis von Siliziumcarbid,
   **dadurch gekennzeichnet,**
   **dass** ein Gemisch aus Siliziumcarbid-Pulver und pulverförmigem pyrolysiertem siliziumorganischem Polymer ("Black Glass") hergestellt wird, wobei der Anteil an pulverförmigem pyrolysiertem siliziumorganischem Polymer mindestens 45 Gew.-% beträgt, bezogen auf die Gesamtmenge an Siliziumcarbid-Pulver und pulverförmigem pyrolysiertem siliziumorganischem Polymer, und das Gemisch bei Temperaturen von 1200°C bis 2500°C und einem Druck von mindestens 1 MPa in inerter Atmosphäre oder im Vakuum verdichtet wird.

2. Verfahren nach Anspruch 1,
   **dadurch gekennzeichnet,**
   **dass** die Verdichtung mittels Heißpressen, heißisostatischem Pressen, Spark Plasma Sintern oder feldunterstütztem Sintern erfolgt.

3. Verfahren nach mindestens einem der Ansprüche 1 oder 2,
   **dadurch gekennzeichnet,**
   **dass** die Verdichtung bei einem Druck von 3 bis 50 MPa durchgeführt wird.

4. Verfahren nach mindestens einem der Ansprüche 1 bis 3,
   **dadurch gekennzeichnet,**
   **dass** das pulverförmige pyrolysierte siliziumorganische Polymer vor dem Vermischen mit dem Siliziumcarbid-Pulver auf eine Teilchengröße von 100 % $\leq$ 10 $\mu$m, bestimmt mittels Laserbeugungsverfahren, aufbereitet wird.

5. Verfahren nach mindestens einem der Ansprüche 1 bis 4,
**dadurch gekennzeichnet,**
**dass** das Gemisch aus Siliziumcarbid-Pulver und pulverförmigem pyrolysiertem siliziumorganischem Polymer auf eine Teilchengröße von 100 % ≤ 10 μm, bestimmt mittels Laserbeugungsverfahren, aufbereitet wird.

6. Verfahren nach mindestens einem der Ansprüche 4 bis 5,
**dadurch gekennzeichnet,**
**dass** die Aufbereitung eine Nassmahlung in deionisiertem Wasser umfasst.

7. Verfahren nach mindestens einem der Ansprüche 1 bis 6,
**dadurch gekennzeichnet,**
**dass** das Gemisch aus Siliziumcarbid-Pulver und pulverförmigem pyrolysiertem siliziumorganischem Polymer maximal 1 Gew.-%, bezogen auf das Gesamtgewicht der Mischung, weitere Bestandteile enthält.

8. Verfahren nach mindestens einem der Ansprüche 1 bis 7,
**dadurch gekennzeichnet,**
**dass** das Gemisch aus Siliziumcarbid-Pulver und pulverförmigem pyrolysiertem siliziumorganischem Polymer keine Bor- oder Aluminium-haltigen Bestandteile enthält.

9. Keramischer Sinterkörper auf Basis von Siliziumcarbid,
**dadurch gekennzeichnet,**
**dass** der Sinterkörper eine amorphe Phase, die aus den Elementen Silizium, Kohlenstoff, Sauerstoff und gegebenenfalls Stickstoff aufgebaut ist, und mindestens eine kristalline Siliziumcarbid-Phase, sowie eine Dichte von mindestens 93% der theoretischen Dichte, bestimmt mittels Wasserverdrängungsverfahren nach Archimedes, aufweist, wobei der Anteil an kristalliner Siliziumcarbid-Phase mindestens 25 Gew.-% und der Gehalt an anderen Elementen als Silizium, Kohlenstoff, Sauerstoff und Stickstoff vorzugsweise ≤ 150 ppm beträgt.

10. Keramischer Sinterkörper nach Anspruch 9,
**dadurch gekennzeichnet,**
**dass** er eine Bruchzähigkeit $K_{IC}$ von ≥ 4 MPa*m$^{1/2}$, eine 4-Punkt-Biegefestigkeit bei Raumtemperatur von ≥ 250 MPa und eine 4-Punkt-Biegefestigkeit bei 1250°C von ≥ 400 MPa aufweist.

Europäisches
Patentamt

European
Patent Office

Office européen
des brevets

# EUROPÄISCHER RECHERCHENBERICHT

**Nummer der Anmeldung**

EP 14 00 1173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 35 00 962 A1 (SHINETSU CHEMICAL CO [JP]) 18. Juli 1985 (1985-07-18) * Beispiel 1 * ----- | 1-8 | INV. C04B35/575 C04B35/571 |
| Y | US 4 564 490 A (OMORI MAMORU [JP] ET AL) 14. Januar 1986 (1986-01-14) * Beispiel 48 * ----- | 1-8 | |
| Y | MOHAMMAD ESFEHANIAN ET AL: "Development of Dense Filler-Free Polymer-Derived SiOC Ceramics by Field-Assisted Sintering", JOURNAL OF THE AMERICAN CERAMIC SOCIETY, Bd. 91, Nr. 11, 1. November 2008 (2008-11-01), Seiten 3803-3805, XP055126141, ISSN: 0002-7820, DOI: 10.1111/j.1551-2916.2008.02730.x * das ganze Dokument * ----- | 9,10 | |
| Y | DE 101 32 505 A1 (WACKER CHEMIE GMBH [DE]) 30. Januar 2003 (2003-01-30) * Ansprüche 1,2,10 * ----- | 9,10 | **RECHERCHIERTE SACHGEBIETE (IPC)**<br><br>C04B |

Der vorliegende Recherchenbericht wurde für alle Patentansprüche erstellt

| Recherchenort | Abschlußdatum der Recherche | Prüfer |
|---|---|---|
| Den Haag | 2. Juli 2014 | Raming, Tomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 00 1173

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2014

| Im Recherchenbericht angeführtes Patentdokument | Datum der Veröffentlichung | Mitglied(er) der Patentfamilie | | Datum der Veröffentlichung |
|---|---|---|---|---|
| DE 3500962 A1 | 18-07-1985 | DE | 3500962 A1 | 18-07-1985 |
| | | JP | H0379306 B2 | 18-12-1991 |
| | | JP | S60151276 A | 09-08-1985 |
| US 4564490 A | 14-01-1986 | DE | 3210987 A1 | 07-10-1982 |
| | | FR | 2502612 A1 | 01-10-1982 |
| | | GB | 2109810 A | 08-06-1983 |
| | | JP | H0139989 B2 | 24-08-1989 |
| | | JP | S57160970 A | 04-10-1982 |
| | | US | 4564490 A | 14-01-1986 |
| DE 10132505 A1 | 30-01-2003 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010007170 A1, Reau
- EP 2487144 A1, Aoki
- EP 2075232 A2, Tanaka
- US 20110148011 A1, Colopy

**In der Beschreibung aufgeführte Nicht-Patentliteratur**

- **ESFEHANIAN et al.** Development of Dense Filler-Free Polymer-Derived SiOC Ceramics by Field-Assisted Sintering. *J. Am. Ceram. Soc.,* 2008, vol. 91 (11), 3803-3805
- Ferrosilicochromium-Filled Polymer-Derived Ceramics. *Int. J. Appl. Ceram. Technol.,* 2011, vol. 8 (6), 1509-1516
- **ZHANG et al.** Synthesis and Characterization of Silicon Oxycarbide Glasses. *J. Am. Ceram. Soc.,* 1990, vol. 73 (4), 958-63
- **HURWITZ et al.** Characterization of the pyrolytic conversion of polysilsesquioxanes to silicon oxycarbides. *J. of Materials Science,* 1993, vol. 28, 6622-6630
- **ROUXEL et al.** High Temperature Behavior of Gel-Derived SiOC Glass: Elasticity and Viscosity. *J. of Sol-Gel Science & Technology,* 1999, vol. 14, 87-94
- **J. KÜBLER.** Fracture Toughness of Ceramics using SEVNB Method: Round Robin. *VAMAS Report Nr. 37,* ISSN 1016-2186